# EUROPÄISCHE PATENTSCHRIFT

(11) **EP 4 023 982 B1**
(45) Veröffentlichungstag und Bekanntmachung des Hinweises auf die Patenterteilung: **20.12.2023**
(21) Anmeldenummer: 20217554.3
(22) Anmeldetag: 29.12.2020
(51) Int. Cl.: F25D 31/00, A21D 15/02, B65G 21/10, B65G 47/64

(54) **VORRICHTUNG ZUM VAKUUMKÜHLEN VON PRODUKTEN, INSBESONDERE BACKWAREN UND ANDEREN LEBENSMITTELN**
DEVICE FOR THE VACUUM COOLING OF PRODUCTS, IN PARTICULAR BAKERY PRODUCTS AND OTHER FOODSTUFFS
DISPOSITIF DE REFROIDISSEMENT SOUS VIDE DE PRODUITS, EN PARTICULIER DE PRODUITS DE BOULANGERIE ET D'AUTRES DENRÉES ALIMENTAIRES

(43) Veröffentlichungstag der Anmeldung: 06.07.2022
(73) Patentinhaber: Durrer Spezialmaschinen AG, 6405 Immensee (CH)
(72) Erfinder: DURRER, Ludwig, 6405 Immensee (CH)
(74) Vertreter: Liebetanz, Michael

(56) Entgegenhaltungen:
- CH-A1- 700 565
- CN-A- 111 678 287
- Aston Foods International AG: "Aston Foods video for vacuum cooling", Youtube, 23 January 2015 (2015-01-23), page 2 pp., XP054981918, Retrieved from the Internet: URL:https://www.youtube.com/watch?v=iVSIqW jQJsw [retrieved on 2021-06-17]

## Beschreibung

Die vorliegende Erfindung betrifft eine Vorrichtung zum Vakuumkühlen von Produkten, insbesondere von Lebensmitteln und darunter unter anderem von Backwaren, mit den Merkmalen des Anspruchs 1.

### STAND DER TECHNIK

Eine solche Vorrichtung zum Vakuumkühlen von Backwaren ist aus dem Video der Aston Foods International AG https://www.youtube.com/watch?v=iVSIqWjQJsw bekannt. Diese Anlage nutzt statt einer, auch in dem Video gezeigten, einzigen Vorrichtung zum Vakuumkühlen eine Hebevorrichtung mit der jeweils eine Charge von zu kühlenden Backwaren, in eine von einer Vielzahl von Vakuumkühleinheiten befördert wird und eine weitere auf der gegenüberliegenden Seite der übereinander gestapelten Vakuumkühleinheiten vorgesehene Hebevorrichtung, die dann gekühlte Backwaren entnimmt. Dies beschleunigt die Kühlung und reduziert die Raumgrösse und Stellfläche der notwendigen Vorrichtung zum Vakuumkühlen.

Dokumente CN111678287A und CH700565A1 offenbaren weitere Vorrichtungen zum Vakuumkühlen von Produkten.

### DARSTELLUNG DER ERFINDUNG

Ausgehend von diesem Stand der Technik, ist es eine Aufgabe der vorliegenden Erfindung, eine Verbesserung vorzuschlagen, mit der der Durchsatz der zu kühlenden Produkte bei einer Vorrichtung zum Vakuumkühlen weiter erhöht werden kann und zusätzlich die Anlage leichter wartbar ist.

Diese Aufgabe wird mit den Merkmalen des Anspruchs 1 gelöst. Dabei ist die vorliegende Erfindung im unabhängigen Anspruch 1 offenbart, wobei weitere Ausführungsbeispiele in den abhängigen Ansprüchen offenbart sind. Die Vorrichtung zum Vakuumkühlen von Produkten weist eine Vielzahl von übereinander angeordneten einzelnen Vakuumkühleinheiten auf, wobei die einzelnen Vakuumkühleinheiten jeweils eine Eingangsklappe, eine gegenüberliegende Ausgangsklappe und einen dazwischen liegenden mit einem Unterdruck beaufschlagbaren Kühlraum aufweisen. Es besteht eine Zuführeinrichtung und eine Wegführeinrichtung, die jeweils einen Hubrahmen und eine in diesem vorgesehene höhenveränderbare Übergabeebene mit einer Produktfördereinrichtung aufweist, wobei die Übergabeebene der Zuführeinrichtung auf einer Zuführseite von einer Ofenausgangsebene mit einer Charge von aus einem Ofen kontinuierlich oder taktweise übermittelte Produkte beschickbar ist, auf der Kühlofenbeschickungsseite in jede vorbestimmte Höhe für eine vorbestimmte, zu beschickende Vakuumkühleinheit hebbar ist und mit der Produktfördereinrichtung, die besagte Charge nach Öffnen der Eingangsklappe, in den zu beschickenden Vakuumkühlraum, zuführbar ist. Im Vakuumkühlraum befindet sich ebenfalls eine Übergabeebene mit Produktfördereinrichtung. Die Übergabeebene der Wegführeinrichtung auf der Kühlkammerentnahmeseite ist in jede vorbestimmte Höhe für eine vorbestimmte zu leerende Vakuumkühleinheit hebbar, wobei mit der Produktfördereinrichtung die im Vakuumkühlraum befindliche Charge, nach Öffnen der Ausgangsklappe aus dem zu leerenden Vakuumkühlraum entfernbar ist und die Übergabeebene der Wegführeinrichtung auf der Wegführseite zu einer Weiterverarbeitungsebene mit der übernommenen Charge von übermittelten Produkte taktweise beschickbar ist. Dazu hat nun die Zuführeinrichtung und die Wegführeinrichtung mindestens zwei übereinander angeordnete, im jeweiligen Hubrahmen für die Höhenverschiebung gekoppelten Übergabeebenen, wobei die Zuführeinrichtung so ausgestaltet ist, um auf der Zuführseite jede der Übergabeebenen sequentiell, mit einer Charge der aus dem Ofen taktweise übermittelten Produkte zu beschicken. Jede der Vakuumkühleinheiten verfügt über eine, der Anzahl an gekoppelten Übergabeebenen entsprechende Anzahl, von übereinander angeordneten Kühlebenen. Die Wegführeinrichtung ist so ausgestaltet, um auf der Kühlkammerentnahmeseite, die Chargen der übermittelten Produkte, auf die Übergabeebenen zu übernehmen, um anschliessend auf der Wegführseite die Weiterverarbeitungsebene, sequentiell mit einer Charge von jeder der von den Übergabeebenen stammenden Produkten, zu beschicken.

Die Vorrichtung ist im Vergleich zum Stand der Technik nicht direkt auf zu kühlende Backwaren ausgerichtet. Es können jegliche eine höhere als die Umgebungstemperatur aufweisende Produkte sein, die bei der Fertigung, Montage etc. eine gegenüber der Umgebungstemperatur höhere Temperatur angenommen haben, die vor der Weiterverarbeitung auf eine tiefere Temperatur, zum Beispiel die Umgebungstemperatur und zumindest weniger darüber abgesenkt werden sollen. Die Vorrichtung ist dabei einsetzbar für jegliche Produkte, insbesondere jegliche Lebensmittel, aber natürlich auch Backwaren. Die wesentliche Bedingung für den Einsatz ist die Möglichkeit des Handling der Produkte auf einzelner Elementbasis wie mit einer Verpackung, einer Backware etc.. Das technische Verfahren und Prinzip der Erfindung ist ebenso beim Vakuumtrocknen von Medizinischen Produkten wie Medikamenten oder Sonstigen zum Beispiel einsetzbar. Es ist somit insbesondere für Produkte einsetzbar, bei denen ein Feuchtigkeitsentzug vom niedrigeren Siedepunkt der enthaltenen oder auf der Oberfläche befindlichen Feuchtigkeit profitiert.

Die Hubbereiche auf beiden Seiten des Kühlturms mit den mindestens zwei Vakuumkühlräumen haben den Vorteil, dass durch das seitliche Verschieben der Übergabeebenen Wartungspersonen leicht alle relevanten Bereiche der Vorrichtung erreichen können.

Vorteilhafterweise hat die Zuführeinrichtung und die Wegführeinrichtung mindestens zwei Gruppen von mindestens zwei übereinander angeordneten, im jeweiligen Hubrahmen für die Höhenverschiebung gekoppelten Übergabeebenen; d.h. sie weist jeweils 2 x 2 Ebenen oder auch 3 x 2 Ebenen, wobei die Zuführeinrichtung ausgestaltet ist, um auf der Zuführseite jede Gruppe von Übergabeebenen, sequentiell mit einer Charge der aus dem Ofen taktweise übermittelten Produkte zu beschicken, während die andere Gruppe eine weitere Charge der aus dem Ofen bereits übermittelten Produkte, in die zugeordneten Kühlebenen eines Vakuumkühlraums überträgt und vice versa. Die Hubeinrichtung kann damit die Gruppen jeweils zusammen nach oben und unten bzw. nach links und rechts verfahren. Die Wegführeinrichtung ist dann vorteilhafterweise analog ausgestaltet, um auf der Kühlkammerentnahmeseite, jede Gruppe von Übergabeebenen sequentiell mit einer Charge der übermittelten Produkte, parallel auf die Übergabeebenen zu übernehmen, während die andere Gruppe auf der Wegführseite die Weiterverarbeitungsebene sequentiell mit einer bereits übernommenen Charge, von jeder der Übergabeebenen stammenden Produkte beschicken.

Die Zuführeinrichtung und die Wegführeinrichtung können dabei jeweils drei und mehr gekoppelte Übergabeebenen, ggf. per Gruppe, aufweisen. Dementsprechend sind dann auch alle Vakuumkühlräume mit einer entsprechenden Anzahl von Ebenen und Produktfördereinrichtungen insbesondere Bandförderer, versehen, die beim Beladen und Entladen synchron mit den Produktfördereinrichtungen der Zuführeinrichtung bzw. Wegführeinrichtung zusammenwirken.

Das freie Ende der Ofenausgangsebene kann höhenverstellbar sein, um die Übergabeebenen vor dem Vakuumkühlraum sequenziell mit Produkten zu beschicken, jeweils eine Übergabeebene der zwei oder mehr von diesen nacheinander.

Das freie Ende der Weiterverarbeitungsebene kann in ähnlicher Weise höhenverstellbar sein, um nach dem Vakuumkühlraum sequenziell von den Übergabeebenen die auf ihnen übernommenen Produkte zu übernehmen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische perspektivische Darstellung einer Produktionslinie mit einer Vorrichtung zum Vakuumkühlen von Backwaren gemäss einem Ausführungsbeispiel der Erfindung;
- Fig. 2: eine teilweise geschnittene, schematische Seitenansicht einer Produktionslinie, mit der Vorrichtung zum Vakuumkühlen von Backwaren gemäss Fig. 1;
- Fig. 3: zwei übereinander angeordnete Darstellungen von einer Seitenansicht und einer teilweise geschnittenen Draufsicht auf die Vorrichtung zum Vakuumkühlen von Backwaren gemäss Fig. 1; und
- Fig. 4: sechs Seitenansichten einer Produktionslinie, die die Arbeitsstufen A bis G darstellt, in ähnlicher Ausgestaltung zur Ausführung nach Fig. 2.

### BESCHREIBUNG BEVORZUGTER AUSFÜHRUNGSFORMEN

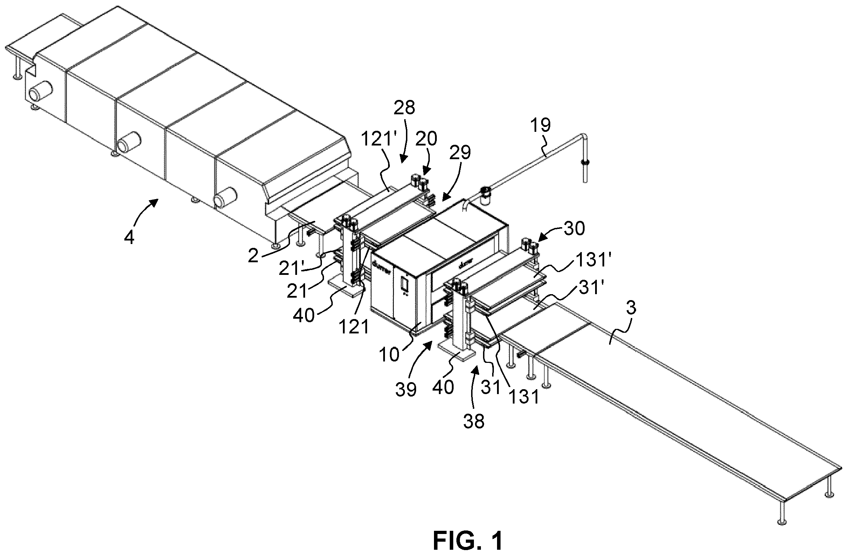

Fig. 1 zeigt eine schematische, perspektivische Darstellung einer Produktionslinie mit einer Vorrichtung zum Vakuumkühlen von Backwaren gemäss einem Ausführungsbeispiel der Erfindung, wobei dieses Ausführungsbeispiel alle technischen Merkmale des unabhängigen Anspruchs 1 aufweist. Im Zusammenhang der Beschreibung des Ausführungsbeispiels nach Fig. 1 wird von zu kühlenden Backwaren 5 gesprochen, die in anderen Figuren als einzelne Produkte dargestellt sind. Insofern kann die hier dargestellte Produktionslinie für jegliche andere aufgeheizte Produkte vorgesehen sein, die schnell abgekühlt werden sollen. Links oben im Bild ist ein Tunnelofen 4 dargestellt, in dem Backwaren gebacken werden und dann auf der Ofenausgangsebene 2 heiss den Tunnelofen 4 verlassen. An die Ofenausgangsebene 2, schliesst sich die Vorrichtung zum Vakuumkühlen 1 an, die aus den drei Einheiten Zuführeinrichtung 20, Vakuumkühleinheit 10 und Wegführeinrichtung 30 besteht. Anschliessend an die Wegführeinrichtung 30 besteht eine Weiterverarbeitungsebene 3, auf der die dann gekühlten Backwaren 5 (dargestellt in anderen Figuren) weiter transportiert und verarbeitet werden.

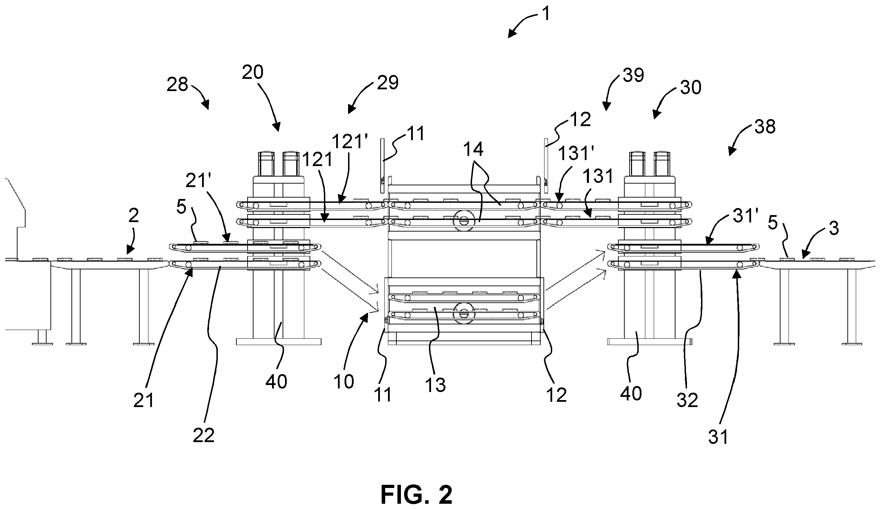

Die Zuführeinrichtung 20 ist im Wesentlichen identisch zur Wegführeinrichtung 30 aufgebaut, was man leicht an der Fig. 2 erkennen kann, welche eine teilweise geschnittene, schematische Seitenansicht der Produktionslinie, mit der Vorrichtung zum Vakuumkühlen 1 von Backwaren 5 gemäss Fig. 1 zeigt. Sämtliche Bezugszeichen, die gleiche Merkmale betreffen, sind in allen Figuren gleich bezeichnet.

Die Zuführeinrichtung 20 besteht aus einem Hubrahmen 40, in dem mindestens eine Gruppe von mindestens zwei Übergabeebenen 21 und 21' angeordnet sind. Das Ausführungsbeispiel der Fig. 1 bis 4 umfasst zwei solche Gruppen, nämlich neben der unteren Übergabeebenen 21 und 21' auch eine Gruppe von oberen Übergabeebenen 121 und 121'. In einem einfacheren Ausführungsbeispiel ist nur eine solche Gruppe von Übergabeebenen vorhanden. Die Übergabeebenen sind in den Hubrahmen 40 vertikal verschiebbar, dabei bleiben die Abstände in der Höhe zwischen der einen (unteren) Übergabeebene 21 und der anderen (oberen) Übergabeebene 21' jeweils gleich. Die Übergabeebenen weisen Produktfördereinrichtungen 22 auf, die mit gegebenenfalls entsprechend vorgesehenen Beförderungselementen auf der Ofenausgangsebene und später in der Vakuumkühleinheit 10 zusammen wirken, um Backwaren 5, die kontinuierlich oder taktweise auf der Ofenausgangsebene 2 präsentiert werden, auf die Übergabeebenen zu transportieren und anschliessend diese von den Übergangsebenen 21 und 21' in die Vakuumkühleinheiten 10 in die dortigen Kühlebenen 14 zu befördern.

Für die Beschickung der Übergabeebenen 21 und 21' sind insbesondere zwei alternative Verfahren möglich. Das eine Verfahren beinhaltet eine in den Zeichnungen nicht dargestellte Steuereinheit, mit der die Gruppe der (hier unteren Übergabeebenen 21 und 21') jeweils sequentiell auf die Höhe der Ofenausgangsebene 2 befördert werden um dann nacheinander mit Backwaren 5 beladen zu werden. Wenn dann beide Übergabeebenen 21 und 21' auf der linken Seite des Hubrahmens 40 auf der Zuführseite 28 beladen sind, bewegt ein weiterer horizontaler Antrieb im Hubrahmen 40 die Einheit aus den unteren Übergabeebenen 21 und 21' auf die rechte Seite in Richtung der Vakuumkühleinheit 10, das heisst auf die Kühlofenbeschickungsseite 29. Dabei werden die Übergabeebenen 21 und 21' durch den Hubrahmen 40 entweder zusätzlich abgesenkt oder gegenüber diesen Ebenen erhöht, um eine vorbestimmte Höhe zu erreichen, um die Backwaren 5 in den Vakuumkühlraum 13 der Vakuumkühleinheit 10 zu überreichen.

In den hier gezeichneten Ausführungsbeispielen sind lediglich zwei Kühlräume 13 übereinander dargestellt. In anderen Ausführungsbeispielen können dies auch drei, vier oder mehr solcher Kühlräume 13 in der Vakuumkühleinheit 10 sein, was zu einem entsprechend höheren Hubrahmen 40 und einem entsprechend höheren Hub führt.

Die Kontrolleinheit öffnet die Eingangsklappe 11 und die Ausgangsklappe 12 des zugeordneten, zu beschickenden Kühlraums 13 mit den direkt davor auf der Kühlofenbeschickungsseite 29 angeordneten, unteren Übergabeebenen 21 und 21', so dass die Backwaren 5 mit der Produktfördereinrichtung 22, welche hier zugeordnet ist, in den Kühlraum 13 befördert werden. Gleichzeitig werden die unteren Übergabeebenen 31 und 31' der Wegführeinrichtung 30 aus der in der Fig. 2 dargestellten Position auf der Wegführseite 38 zur Kühlkammerentnahmeseite 39 bewegt (in der Fig. 2 nicht dargestellt) um die Backwaren 5 aus den Kühlebenen 13 durch die geöffnete Ausgangsklappe 12 zu übernehmen. Anschliessend werden die Eingangsklappe 11 und die Ausgangsklappe 12 geschlossen und anschliessend wird der Vakuumkühlraum 13 mit den beiden in ihr vorgesehenen Kühlebenen 13 über einen vorbestimmten Zeitraum mit Unterdruck beaufschlagt, um die entsprechende Kühlung zu erreichen. Anschliessend werden nach Ausgleich des Drucks auf den Umgebungsdruck, die Eingangsklappe 11 und die Ausgangsklappe 12 geöffnet.

Wenn die Backwaren 5 auf den unteren Übergabeebenen 31 und 31' parallel angekommen sind, wird der Hubantrieb der Wegführeinrichtung 30, die unteren Übergabeebenen 31 und 31' auf die rechte Seite zur Wegführseite 38 fahren und in der Höhe so verstellen, dass zuerst die eine untere Übergabeebene 31, wie in der Fig. 2 dargestellt und anschliessend die andere untere Übergabeebene 31', die Backwaren 5 auf die Weiterverarbeitungsebene 3 entlädt.

Es ist klar, dass es nicht nur zwei dieser gekoppelten Übergabeebenen 21, 21', 31 und 31' geben kann. Es können auch drei oder mehr solche Übergabeebenen bestehen, wobei durch das sequenzielle Beladen, die Beladezeit etwas länger wird. Es ist dann auch klar, dass natürlich in der Vakuumkühleinheit 10 jeder Vakuumkühlraum 13 eine entsprechende (grössere) Anzahl von Kühlebenen 14 aufweist. Die hier dargestellte Anzahl von zwei ist nur ein Ausführungsbeispiel.

Eine alternative Beschickung der unteren Übergabeebene ist dadurch erreichbar, dass die unteren Übergabeebenen 21 und 21' zur Beschickung auf einer vorbestimmten Höhe stehen und die untere Ausgangsebene auf dem freien Ende zur Zuführseite in der Höhe verstellbar sind, so dass die Backwaren entweder nach oben, auf die obere der unteren Ebenen 21', oder auf die untere, der unteren Ebenen 21, geladen werden. In gleicherweise kann das Entladen auf der Wegführseite 38 durch eine entsprechende Anpassung des freien Endes der Wegführebene 3, angepasst werden.

Nach diesem grundsätzlichen Verfahren ist es für die Erfindung, die im unabhängigen Anspruch 1 offenbart ist, ausreichend, eine solche, gekoppelte Übergabeeinheit zu haben.

Insbesondere bei einer grösseren Anzahl von Vakuumkühlräumen 13 der Vakuumkühleinheit 10, kann es in einem weiteren Ausführungsbeispiel, wie in der Fig. 2 dargestellt, vorteilhaft sein, in den Hubrahmen 40 jeweils zwei voneinander unabhängige Übergabeebenen-Gruppen zu haben, nämlich eine zweite obere Übergabeebene-Gruppe mit den oberen Übergabeebenen 121 und 121'. Diese sind dann vorteilhafterweise bei der Wegführeinrichtung ebenfalls als (weitere) obere Übergabeebenen 131 und 131' vorhanden.

Dann ist es möglich, nach der Übernahme von Backwaren auf diese Ebenen, diese in einem höheren Bereich der Vakuumkühleinheit 10 in entsprechende Vakuumkühlräume 13 zu beladen, während gleichzeitig bereits in dem unteren Übergabeebenen 21 und 21', die nächsten einlaufenden Gruppen von Backwaren auf diese Übergabeebenen übernommen werden. Wenn dann die unteren Übergabeebenen 21 und 21' wie oben, bei der Erläuterung des Verfahrens, von der Zuführseite 28 auf die Kühlkammerbeschickungsseite 29 befördert werden, können die dann geleerten oberen Übergabeebenen 121 und 121' aus der beladenen Position der Kühlkammerbeschickungsseite 29 auf die Zuführseite 28 zurückbefördert werden, um die nächste Charge von Backwaren 5 zu übernehmen, während die unteren Übergabeebenen ihre Backwaren in eine der unteren Vakuumkühlräume 13 befördern. Somit ist es möglich, auf sehr geringem Platz, die kontinuierlich oder getaktet einlaufenden Backwaren in schneller Folge, sequenziell auf Gruppen von Übergabeebenen zu befördern und diese dann parallel in die Kühlkammern zu beschicken. Die vorteilhafte Arbeitsweise ist dann ebenfalls genauso auf der Wegführseite, in spiegelbildlicher Weise erreichbar.

Ein weiterer Vorteil dieser Arbeitsweise mit den Hubrahmen 40 als zentrale Einheit der Zuführeinrichtung 20 und der Wegführeinrichtung 30 liegt darin, dass, wenn alle Übergabeebenen 21, 21' und oder 121, 121' beispielsweise auf der Zuführseite 28 angeordnet sind, ein Freiraum besteht, der auf der Kühlofenbeschickungsseite 29 ausreichend Platz für Wartungspersonal bietet, um an den Kühlebenen selber zu arbeiten. Derselbe Vorteil ergibt sich auf der Wegführseite 30 dadurch, dass beide Seiten 20 und 30 jeweils einen horizontalen Antrieb für die Gruppe der Übergabeebenen aufweist und somit der Platz direkt an der Kühlkammereinheit 10 freigehalten werden kann.

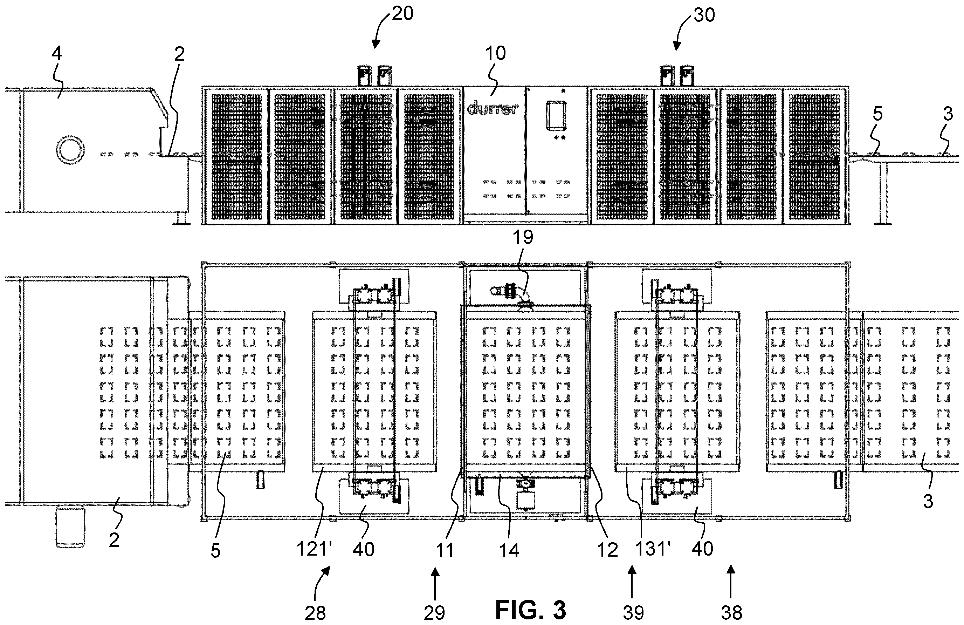

Die Fig. 3 zeigt zwei übereinander angeordnete Darstellungen von einer Seitenansicht und einer teilweise geschnittenen Draufsicht auf die Vorrichtung zum Vakuumkühlen von Backwaren gemäss Fig. 1. Dabei sind die Übergabeebenen 121' und 131' in Bewegungsrichtung der Backwaren 5 mittig dargestellt, also, da sie mit Backwaren 5 beladen dargestellt sind, auf dem Weg in Bewegungsrichtung der Backwaren 5 zum Vakuumkühlraum bzw. zur Weiterverarbeitungsebene 3. Dabei ist erkennbar, dass die Länge der Übergabeebenen 121' und 131' in Bewegungsrichtung der Backwaren 5 jeweils dergestalt ist, dass bei einem Bewegen derselben bis zum Anschlag, jeweils die gegenüberliegende Seite vom Hubrahmen 40 vollkommen frei ist. Also bei einer Abgabe der Backwaren 5 an die Kühlebene ist die Kühlkammerbeschickungsseite 29 abgedeckt und die Zuführseite 28 frei (was bei Stillstand der Maschine den Platz für Wartungsarbeiten ergibt) und vice versa.

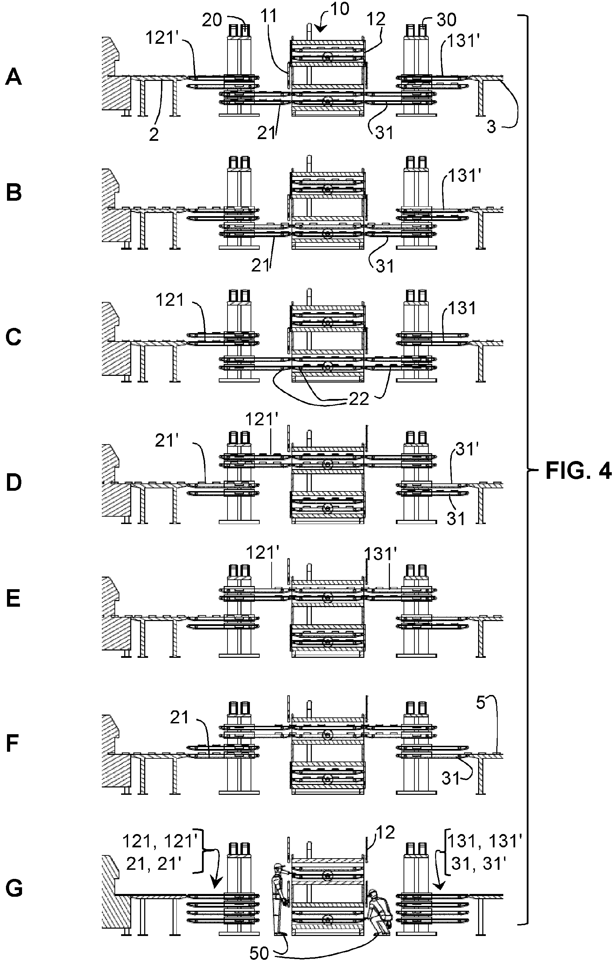

Die Fig. 4 zeigt sechs Seitenansichten einer Produktionslinie, die die Arbeitsstufen A bis G darstellt, wobei die zuunterst dargestellte Arbeitsstufe die vorteilhafte Wartungsfreundlichkeit der Vorrichtung aufzeigt, indem zwei Wartungspersonen 50 eingezeichnet sind. Die Bezugszeichen sind dabei wie bei der Ausführung nach Fig. 2 gewählt.

Auf Grund der Platzverhältnisse auf dem Zeichnungsblatt sind immer nur die relevanten Bezugszeichen in jedem Arbeitsschritt für die Zuführeinrichtung 20 und die Wegführeinrichtung 30 vorgesehen. Es sind dabei neben den Höheneinstellungen der Übergabeebenen 21, 21', 31, 31', 121, 121', 131 sowie 131' die auf diesen lose liegenden Produkte 5, hier Backwaren dargestellt, die aus der Ofenausgangsebene 2 in aufgeheiztem Zustand der Vorrichtung zugeführt werden und nach der Vakuumkühlung in der Vakuumkühleinheit 10 dann näher oder an der Umgebungstemperatur nach der Weiterverarbeitungsebene weiter verarbeitet werden.

In der obersten teilweise geschnittenen Seitenansicht A ist der untere Vakuumkühlraum 13 offen, dadurch dass die untere Eingangsklappe 11 und die untere Ausgangsklappe 12 offen sind. Die obere der oberen Übergabeebenen 121' ist auf der linken Eingangsseite auf einer Höhe mit der Ofenausgangsebene 2 wie auch die obere der oberen Übergabeebenen 131' auf einer Höhe mit der Weiterverarbeitungsebene 3. Zwischen den beiden Darstellungen A und B, werden dabei ausgangsseitig die Produkte von dieser Ebene abtransportiert und eingangsseitig diese Ebene beladen. Gleichzeitig wird von den beiden unteren Übergabeebenen 21 und 21' gleichzeitig der Vakuumkühlraum 13 beschickt, während er auf der Ausgangsseite entladen wird. Der obere der beiden Vakuumkühlräume 13 ist dabei evakuiert und kühlt die in ihm befindlichen Produkte 5.

Zwischen den Darstellungen B und C sind die unteren der oberen Übergabeebenen 121 und 131 so verschoben worden, dass diese beladen bzw. entladen werden können. In einem anderen Ausführungsbeispiel werden dabei nicht die Ebenen 121 121', 131, 131' in den Einrichtungen 20 und 30 bewegt, sondern die Ofenausgangsebene 2 bzw. die Weiterverarbeitungsebene 3 mit diesen Ebenen gegenüberliegenden Enden hier angehoben bzw. abgesenkt. In der Darstellung von C hat dabei der Belade- bzw. Entladevorgang bereits stattgefunden.

Zwischen den Darstellungen C und D werden die Hubeinrichtungen der Zuführeinrichtung 20 und der Wegführeinrichtung 30 aktiviert und zum in den Stufen A, B, C unter Vakuum stehenden oberen Vakuumkühlraum 13 geführt, dessen Innenatmosphäre wieder mit der Umgebungsluft gefüllt wird und nach Öffnen der Klappen 11 und 12 werden die Übergabeebenen 121, 121' bzw. 131, 131' nahe an die Förderbänder 22 in dem Vakuumkühlraum 13 herangefahren, so dass beim Übergang zur Darstellung des Buchstabens E die Produkte 5 beladen bzw. entladen werden. dabei werden zugleich die oberen der unteren Übergabeebenen 21' bzw. 31' von der Offenausgangsebene 2 beladen bzw. zu der Weiterverarbeitungsebene 3 entladen. Der Übergang zur Darstellung der Buchstabens F beendet das Laden und Entladen des oberen Vakuumkühlraums 13 und führt das Beladen bzw. Entladen der unteren der unteren Übergabeebenen 21 bzw. 31 aus.

Die unterste Darstellung G zeigt dann alle Übergabenebenen 21, 21', 121, 121' eingangsseitig zur Ofenausgangsebene 2 geschoben und in der Höhe in einer unteren Position angeordnet. Dann kann in den Raum zwischen Zuführeinrichtung 20 und Vakuumkühleinheit 10 eine Wartungsperson 50 eintreten und sowohl die Übergabeebenen als auch die Zuführeinrichtung 20 warten als auch von der Seite der Eingangsklappen 11 her die Vakuumkühlräume 13 inspizieren. Dasselbe gilt aussgangsseitig für den Raum zwischen Zuführeinrichtung 20 und Vakuumkühleinheit 10 eine Wartungsperson 50 eintreten und sowohl die Übergabeebenen und die Zuführeinrichtung 20 warten als auch von der Seite der Eingangsklappen 11 her die Vakuumkühlräume 13 inspizieren. Dasselbe ist gültig für die Aussagngsseite mit hier einer zweiten dargestellten Wartungsperson 50.

### BEZUGSZEICHENLISTE

| | | | |
|---|---|---|---|
| 1 | Vorrichtung zum Vakuumkühlen | 22 | Produktfördereinrichtung |
| 2 | Ofenausgangsebene | 28 | Zuführseite |
| 3 | Weiterverarbeitungsebene | 29 | Kühlkammerbeschickungsseite |
| 4 | Tunnelofen | 30 | Wegführeinrichtung |
| 5 | zu kühlendes Produkt / | 31 | (untere) Übergabeebene |
| | Backware | 31' | (untere) Übergabeebene |
| 10 | Vakuumkühleinheit | 32 | Produktfördereinrichtung |
| 11 | Eingangsklappe | 38 | Wegführseite |
| 12 | Ausgangsklappe | 39 | Kühlkammerentnahmeseite |
| 13 | Vakuumkühlraum | 40 | Hubrahme |
| 14 | Kühlebene | 50 | Wartungsperson |
| 19 | Vakuumpumprohr | 121 | obere Übergabeebene |
| 20 | Zuführeinrichtung | 121' | obere Übergabeebene |
| 21 | (untere) Übergabeebene | 131 | obere Übergabeebene |
| 21' | (untere) Übergabeebene | 131' | obere Übergabeebene |

## Patentansprüche

1. Vorrichtung (1) zum Vakuumkühlen von Produkten (5), insbesondere Backwaren und andere Lebensmittel, mit einer Vielzahl von übereinander angeordneten einzelnen Vakuumkühleinheiten (10), wobei die einzelnen Vakuumkühleinheiten (10) jeweils eine Eingangsklappe (11), eine gegenüberliegende Ausgangsklappe (12) und einen dazwischen liegenden, mit einem Unterdruck beaufschlagbaren Kühlraum (13) mit einer Produktfördereinrichtung (22) aufweisen, mit einer Zuführeinrichtung (20) und mit einer Wegführeinrichtung (30), die jeweils einen Hubrahmen (40) und eine in diesem vorgesehene höhenveränderbare Übergabeebene (21, 31) mit einer Produktfördereinrichtung (22, 32) aufweisen, wobei die Übergabeebene (21) der Zuführeinrichtung (20) auf einer Zuführseite (28) von einer Ofenausgangsebene (2) mit einer Charge, von aus einem Ofen kontinuierlich oder taktweise übermittelten Produkte (5) beschickbar ist, auf der Kühlkammerbeschickungsseite (29) in jede vorbestimmte Höhe, für eine vorbestimmte, zu beschickende Vakuumkühleinheit (10), hebbar ist und mit der Produktfördereinrichtung (22) die besagte Charge, nach Öffnen der Eingangsklappe (11), in den zu beschickenden Vakuumkühlraum (13) zuführbar ist, wobei die Übergabeebene (31, 31') der Wegführeinrichtung (30) auf der Kühlkammerentnahmeseite (39) in jede vorbestimmte Höhe, für eine vorbestimmte, zu leerende Vakuumkühleinheit (10) hebbar ist, mit der Produktfördereinrichtung (32) die im Vakuumkühlraum (13) befindliche Charge, nach Öffnen der Ausgangsklappe (12) aus dem zu leerenden Vakuumkühlraum (13) entfernbar ist und die Übergabeebene (31) der Wegführeinrichtung (30) auf der Wegführseite (38), zu einer Weiterverarbeitungsebene (3) mit der übernommenen Charge von übermittelten Produkten (5) taktweise beschickbar ist, **dadurch gekennzeichnet, dass** die Zuführeinrichtung (20) und die Wegführeinrichtung (30) mindestens zwei übereinander angeordnete, im jeweiligen Hubrahmen (40) für die Höhenverschiebung gekoppelte Übergabeebenen (21, 21'; 31, 31') aufweisen, wobei die Zuführeinrichtung (20) ausgestaltet ist, um auf der Zuführseite (2) jede der Übergabeebenen (21 und 21') sequentiell mit einer Charge der aus dem Ofen taktweise übermittelten Produkte (5) zu beschicken, dass jeder der Vakuumkühleinheiten (10) über eine, der Anzahl an gekoppelten Übergabeebenen (21, 21', 31, 31') entsprechende Anzahl von übereinander angeordneten getrennt evakuierbare Kühlebenen (14) verfügt, und dass die Wegführeinrichtung (30) ausgestaltet ist, um auf der Kühlkammerentnahmeseite (39) die Chargen der übermittelten Produkte (5) in parallel auf die Übergabeebenen (31 und 31') zu übernehmen und anschliessend auf der Wegführseite (38) die Weiterverarbeitungsebene (3) sequentiell mit einer Charge von jeder der Übergabeebenen (31, 31') stammenden Produkte (5) zu beschicken.

2. Vorrichtung (1) nach Anspruch 1, wobei die Zuführeinrichtung (20) und die Wegführeinrichtung (30) mindestens zwei Gruppen (21 und 121; 31 und 131) von mindestens zwei übereinander angeordneten, im jeweiligen Hubrahmen (40) für die Höhenverschiebung gekoppelten Übergabeebenen (21, 21'; 31, 31'; 121, 121'; 131, 131') aufweist, wobei die Zuführeinrichtung (20) ausgestaltet ist, um auf der Zuführseite (2) jede Gruppe von Übergabeebenen (21 und 21'), sequentiell mit einer Charge der aus dem Ofen taktweise übermittelten Produkte (5) zu beschicken, während die andere Gruppe (121 und 121') eine weitere Charge der aus dem Ofen bereits übermittelten Produkte (5), in die zugeordneten Kühlebenen (14) eines Vakuumkühlraums (13) überträgt und vice versa, und dass die Wegführeinrichtung (30) ausgestaltet ist, um auf der Kühlkammerentnahmeseite (39), jede Gruppe von Übergabeebenen (31 und 31') sequentiell mit einer Charge der übermittelten Produkte (5), parallel auf die Übergabeebenen (31 und 31') zu übernehmen, während die andere Gruppe (131 und 131') auf der Wegführseite (38) die Weiterverarbeitungsebene (3) sequentiell mit einer bereits übernommenen Charge, von jeder der Übergabeebenen (131, 131') stammenden Produkte (5) zu beschicken.

3. Vorrichtung (1) nach Anspruch 1 oder 2, **dadurch gekennzeichnet, dass** die Zuführeinrichtung (20) und die Wegführeinrichtung (30) jeweils drei und mehr gekoppelte Übergabeebenen (21, 21'; 31, 31'; 121, 121'; 131, 131'), ggf. per Gruppe, aufweisen.

4. Vorrichtung (1) nach einem der Ansprüche 1 bis 3, **dadurch gekennzeichnet, dass** das freie Ende der Ofenausgangsebene (2) höhenverstellbar ist, um die Übergabeebenen (21, 21', 121, 121') vor dem Vakuumkühlrum (13) sequenziell mit Produkten (5) zu beschicken.

5. Vorrichtung (1) nach einem der Ansprüche 1 bis 4, **dadurch gekennzeichnet, dass** das freie Ende der Weiterverarbeitungsebene (3) höhenverstellbar ist, um nach dem Vakuumkühlraum (13) sequenziell von den Übergabeebenen (31, 31', 131, 131') die auf ihnen übernommenen Produkte (5) zu übernehmen.

## Claims

1. A device (1) for the vacuum cooling of products (5), in particular bakery products and other foodstuffs, having a plurality of individual vacuum cooling units (10) arranged one above the other, the individual vacuum cooling units (10) each having an inlet flap (11), an opposite outlet flap (12) and a cooling chamber (13) which is located in between and can be acted upon by a negative pressure and has a product conveying device (22), having a feed device (20) and having a removal device (30), which each have a lifting frame (40) and a height-adjustable transfer plane (21, 31) provided therein with a product conveying device (22, 32), wherein the transfer plane (21) of the feed device (20) can be charged on a feed side (28) from an oven outlet plane (2) with a batch of products (5) transferred continuously or cyclically from an oven, on the cooling chamber charging side (29) to any predetermined height, for a predetermined vacuum cooling unit to be charged, and the said batch can be fed into the vacuum cooling chamber (13) to be charged by means of the product conveying device (22) after the inlet flap (11) has been opened, the transfer plane (31, 31') of the removal device (30) on the cooling chamber removal side (39) can be raised to any predetermined height, for a predetermined vacuum cooling unit (10) to be emptied, with the product conveying device (32) the batch located in the vacuum cooling chamber (13), can be removed from the vacuum cooling chamber (13) to be emptied after the outlet flap (12) has been opened, and the transfer plane (31) of the removal device (30) on the removal side (38) can be fed cyclically to a further-processing plane (3) with the transferred batch of transferred products (5), **characterised in that** the feed device (20) and the removal device (30) have at least two transfer planes (21, 21'; 31, 31') arranged one above the other in the respective lifting frame (40) for height displacement, the feed device (20) being designed to feed each of the transfer planes (21 and 21') sequentially on the feed side (2) with a batch of the products (5) transferred cyclically from the oven, **in that** each of the vacuum cooling units (10) has a number of separately evacuable cooling planes (14) arranged one above the other corresponding to the number of coupled transfer planes (21, 21', 31, 31'), and **in that** the removal device (30) is designed to take over, on the cooling chamber removal side (39), the batches of the transferred products (5) in parallel on the transfer planes (31 and 31') and then, on the removal side (38), to feed the further processing plane (3) sequentially with a batch of products (5) originating from each of the transfer planes (31, 31').

2. The device (1) according to claim 1, wherein the feed device (20) and the removal device (30) comprise at least two groups (21 and 121; 31 and 131) of at least two transfer planes (21, 21'; 31, 31'; 121, 121') arranged one above the other and coupled in the respective lifting frame (40) for the height displacement, wherein the feed device (20) is designed to feed each group of transfer planes (21 and 21') sequentially on the feed side (2) with a batch of the products (5) transferred cyclically from the oven, while the other group (121 and 121') transfers a further batch of the products (5) already transferred from the oven into the associated cooling planes (14) of a vacuum cooling chamber (13) and vice versa, and in that the removal device (30) is designed to transfer, on the cooling chamber removal side (39), each group of transfer planes (31 and 31') sequentially with a batch of the transferred products (5), in parallel to the transfer planes (31 and 31'), while the other group (131 and 131'), on the removal side (38), sequentially feeds the further processing level (3) with a batch of products (5) already transferred from each of the transfer levels (131, 131').

3. The device (1) according to claim 1 or 2, **characterized in that** the feeding device (20) and the removal device (30) each comprise three or more coupled transfer levels (21, 21'; 31, 31'; 121, 121'; 131, 131'), optionally per group.

4. The device (1) according to any one of the claims 1 to 3, **characterised in that** the free end of the oven exit plane (2) is height-adjustable in order to feed the transfer planes (21, 21', 121, 121') sequentially with products (5) upstream of the vacuum cooling chamber (13).

5. The device (1) according to any one of claims 1 to 4, **characterised in that** the free end of the further processing plane (3) is adjustable in height in order to sequentially take over from the transfer planes (31, 31', 131, 131'), after the vacuum cooling chamber (13), the products (5) taken over on them.

## Revendications

1. Dispositif (1) de refroidissement sous vide de produits (5), en particulier de produits de boulangerie et d'autres denrées alimentaires, avec une pluralité d'unités de refroidissement sous vide individuelles (10) disposées les unes au-dessus des autres, les unités de refroidissement sous vide individuelles (10) présentant chacune une trappe d'entrée (11), une trappe de sortie (12) opposée et un espace de refroidissement (13) situé entre les deux et pouvant être soumis à une dépression, avec un dispositif de transport de produits (22), avec un dispositif d'alimentation (20) et avec un dispositif d'évacuation (30), qui présentent chacun un cadre de levage (40) et un plan de transfert (21, 31) prévu dans celui-ci et modifiable en hauteur avec un dispositif de transport de produits (22, 32), le plan de transfert (21) du dispositif d'alimentation (20) pouvant être chargé sur un côté d'alimentation (28) d'un plan de sortie de four (2) avec une charge de produits (5) transférés d'un four en continu ou de manière cadencée, sur le côté de chargement de la chambre de refroidissement (29) à chaque hauteur prédéterminée, pour une unité de refroidissement sous vide (10) à charger, et où le dispositif de transport de produits (22) permet d'amener ladite charge, après ouverture de la trappe d'entrée (11), dans la chambre de refroidissement sous vide (13) à charger, où le plan de transfert (31, 31') du dispositif d'évacuation (30) sur le côté de prélèvement de la chambre de refroidissement (39) peut être soulevé à n'importe quelle hauteur prédéterminée, pour une unité de refroidissement sous vide (10) prédéterminée à vider, avec le dispositif de transport de produit (32) la charge se trouvant dans la chambre de refroidissement sous vide (13), après l'ouverture de la trappe de sortie (12), de l'espace de refroidissement sous vide (13) à vider, et où le plan de transfert (31) du dispositif d'évacuation (30) peut être alimenté en cadence, sur le côté d'évacuation (38), vers un plan de traitement ultérieur (3), avec la charge de produits (5) transférés qui a été prise en charge, **caractérisé en ce que** le dispositif d'alimentation (20) et le dispositif d'évacuation (30) comportent au moins deux plans de transfert (21, 21', 31', 31") superposés et couplés dans le cadre de levage (40) respectif pour le déplacement en hauteur ; le dispositif d'alimentation (20) étant conçu pour charger séquentiellement, sur le côté d'alimentation (2), chacun des plans de transfert (21 et 21') avec une charge des produits (5) transférés en cadence depuis le four, **en ce que** chacune des unités de refroidissement sous vide (10) dispose d'un nombre de plans de refroidissement (14) disposés les uns au-dessus des autres et pouvant être évacués séparément, correspondant au nombre de plans de transfert couplés (21, 21', 31, 31'), et **en ce que** le dispositif d'évacuation (30) est conçu pour prendre en charge, du côté du prélèvement de la chambre de refroidissement (39), les charges de produits (5) transférés en parallèle sur les plans de transfert (31 et 31') et pour alimenter ensuite, du côté de d'évacuation (38), le plan de traitement ultérieur (3) de manière séquentielle avec une charge de produits (5) provenant de chacun des plans de transfert (31, 31').

2. Dispositif (1) selon la revendication 1, dans lequel le dispositif d'alimentation (20) et le dispositif d'évacuation (30) comportent au moins deux groupes (21 et 121 ; 31 et 131) d'au moins deux plans de transfert (21, 21' ; 31, 31' ; 121, 121') superposés, couplés dans le cadre de levage (40) respectif pour le déplacement en hauteur, le dispositif d'alimentation (20) étant conçu pour charger séquentiellement, sur le côté d'alimentation (2), chaque groupe de plans de transfert (21 et 21') avec une charge des produits (5) transférés en cadence depuis le four, tandis que l'autre groupe (121 et 121') transfère une autre charge des produits (5) déjà transférés depuis le four dans les plans de refroidissement (14) associés d'une chambre de refroidissement sous vide (13) et vice versa, et en ce que le dispositif d'évacuation (30) est conçu pour prendre en charge, sur le côté de prélèvement de la chambre de refroidissement (39), chaque groupe de plans de transfert (31 et 31') de manière séquentielle avec une charge des produits (5) transférés, en parallèle sur les plans de transfert (31 et 31'), tandis que l'autre groupe (131 et 131'), du côté de l'évacuation (38), alimente séquentiellement le niveau de traitement ultérieur (3) avec une charge de produits (5), déjà pris en charge, provenant de chacun des niveaux de transfert (131, 131').

3. Dispositif (1) selon la revendication 1 ou 2, **caractérisé en ce que** le dispositif d'alimentation (20) et le dispositif d'évacuation (30) comportent chacun trois plans de transfert couplés (21, 21' ; 31, 31' ; 121, 121' ; 131, 131') ou plus, éventuellement par groupe.

4. Dispositif (1) selon l'une quelconque des revendications 1 à 3, **caractérisé en ce que** l'extrémité libre du plan de sortie du four (2) est réglable en hauteur pour alimenter en produits (5) les plans de transfert (21, 21', 121, 121') de manière séquentielle avant la chambre de refroidissement sous vide (13).

5. Dispositif (1) selon l'une quelconque des revendications 1 à 4, **caractérisé en ce que** l'extrémité libre du plan de traitement ultérieur (3) est réglable en hauteur pour prendre en charge, en aval de la chambre de refroidissement sous vide (13), de manière séquentielle depuis les plans de transfert (31, 31', 131, 131'), les produits (5) pris en charge sur ces plans.
